# EUROPÄISCHE PATENTSCHRIFT

(11) **EP 1 857 724 B1**
(45) Veröffentlichungstag und Bekanntmachung des Hinweises auf die Patenterteilung: **11.03.2009**
(21) Anmeldenummer: 07005897.9
(22) Anmeldetag: 22.03.2007
(51) Int. Cl.: F16L 19/028

(54) **Rohrverbindung mit einem umgeformten Rohr**
Pipe joint with a deformed pipe
Raccord de tuyau avec tuyau déformé

(30) Priorität: 18.05.2006 DE 102006023650
(43) Veröffentlichungstag der Anmeldung: 21.11.2007
(73) Patentinhaber: Eifeler Maschinenbau GmbH, 53881 Euskirchen (DE)
(72) Erfinder: Kloss, Alexander, 50997 Köln (DE); Schorn-Gilson, Alfons, 53913 Swisttal-Odendorf (DE)
(74) Vertreter: Bauer, Dirk

(56) Entgegenhaltungen:
- EP-A- 1 731 817
- DE-A1- 4 034 803
- DE-B3- 10 313 678
- DE-U- 7 431 646

## Beschreibung

Die Erfindung betrifft eine Rohrverbindung mit einem umgeformten Rohr, einem Verschraubungskörper mit einem Innenkonus, einer auf den Verschraubungskörper aufschraubbaren Überwurfmutter mit einer inneren Spannfläche, die im Betriebszustand der Rohrverbindung mit einer dem Rohrende abgewandten umformtechnisch hergestellten, radial über die äußere Mantelfläche des Rohres nach außen vorstehenden Haltefläche eines Haltewulstes des Rohres zusammenwirkt, sowie mit einem Adapterring, der sich an der dem Verschraubungskörper zugewandten Seite mit einer kegeligen Spannfläche in dem Innenkonus des Verschraubungskörpers abstützt, wobei eine radial verlaufende Stirnfläche des Rohrendes den selben Querschnitt aufweist wie das übrige Rohr außerhalb des Halterwulstes.

Aus der deutschen Patentanmeldung 10 2005 026 580.4 ist eine derartige Rohrverbindung bekannt. Hier wird ein Stützring derart angeordnet, dass er sich jeweils mit gegenüberliegenden kegeligen Flächen einerseits an dem Innenkonus des Verschraubungskörpers und andererseits an der inneren Spannfläche der Überwurfmutter abstützt. Gleichzeitig findet der Stützring Anlage an einer Haltefläche des Haltewulstes des Rohres und an der Mantelfläche des Rohres selbst, um das Rohr auf diese Weise in axiale Richtung festzulegen. Dabei erstreckt sich das Rohr mit seiner Stirnfläche zum Teil radial nach innen in den Querschnitt der Durchgangsbohrung des Verschraubungskörpers und verringert in diesem Bereich den Innendurchmesser der Rohrverbindung. Nachteilig an dieser Rohrverbindung ist, dass es aufgrund des in den Innendurchmesser ragenden Rohres zu Verwirbelungen in dem das Rohr durchströmenden Mediums kommt, wodurch ein Druckabfall im System hervorgerufen wird, was insbesondere bei niedrigen Innendurchmessern auftritt. Die Folge davon ist ein hoher Energieverlust im strömendem Medium. Ferner ist es nachteilig an dieser Rohrverbindung, dass die durch das Rohr gebildeten Vorsprünge im Innendurchmesser einer Rohrleitung und die damit einhergehenden Verwirbelungen eine große Lärmentwicklung verursachen.

Aus dem Stand der Technik sind ebenso andere Arten von Rohrverbindungen bekannt. Eine bekannte Rohrverschraubung ist die "Bördel-Rohrverschraubung ABO 37°" der Eifler Maschinenbau GmbH, Euskirchen, bei dem das umgeformte Rohr jedoch nicht mit einem Wulst ausgestattet, sondern an seinem Ende zu einer Bördeltulpe aufgeweitet ist und durch einen zusätzlichen Stützring in seiner Lage gehalten wird. Hier wird zwischen dem Verschraubungskörper und dem Rohr ein Adapter zwischengeschaltet, der zu beiden Seiten hin mit einer kegeligen Spannfläche ausgestattet ist, die jeweils an den Innenkonus des Verschraubungskörpers beziehungsweise an den durch die Innenseite der konisch geformten Bördeltulpe angepasst ist. So bildet der Adapter einen Übergang von dem 24°-Konus des Verschraubungskörpers zum 37°-Bördelanschluss des Rohres. Auch hier ragt für gewöhnlich der Adapter ein wenig in den Innenquerschnitt der Rohrverbindung, wodurch die oben aufgeführten Nachteile auftreten können.

Aus der DE 40 34 803 A1 ist des Weiteren ein Verbindungssystem für höchstdruckfeste Rohrverschraubungen mit einem genormten 24° Verschraubungskörper bekannt. Das Ende des an den Verschraubungskörper anzuschließenden Rohres ist entweder aufgebördelt (Figur 1 der DE 40 34 803 A1) oder mit einem einstückig mit dem Rohrende verbundenen Flansch versehen, der in einem Fall (Figur 2 der DE 40 34 803 A1) mit einer radialen Stirnfläche und in einem anderen Fall (Figur 3 der DE 40 34 803 A1) mit einer Stirnfläche in Form einer Kugelkalotte ausgestattet ist. In allen Fällen ist jedenfalls die freie Querschnittsfläche des Rohrendes im Querschnitt radial nach außen erweitert gegenüber dem Querschnitt des Rohres in dem übrigen Rohr außerhalb des Verbindungsbereichs. Für einen im stirnseitigen Bereich des Rohrendes angeordneten und innerhalb der korrespondierenden Stirnseite des Adapterrings in einer Nut gelagerten Dichtungsring steht somit hinreichend Platz zur Verfügung.

Aus der DE 197 23 344 A1 und der DE-GM 74 31 646 U1 sind des Weiteren noch Rohrverschraubungen bekannt, bei denen ein Schneidring bzw. ein Klemmring zur Anwendung kommt, der mit der unverformten äußeren Mantelfläche des Rohrendes zusammenwirkt. Auch bei diesen bekannten Verschraubungen sind Adapterringe vorhanden, um einen Übergang zu einem Verschraubungskörper herzustellen. Bei Schneidring- bzw. Klemmringverschraubungen besteht jedoch grundsätzlich die Gefahr, dass diese ausgehend vom Betriebszustand nach einmaligem Lösen beim Wiederanziehen ihre Dichtungsfunktion nicht wieder ordnungsgemäß und zuverlässig erfüllen.

### Aufgabe

Aufgabe der vorliegenden Erfindung ist es, eine alternative Rohrverbindung der eingangs beschriebenen Art zu schaffen, mit der ein umgeformtes Rohr mit einem Verschraubungskörper mit Innenkonus kombinierbar ist.

### Lösung

Ausgehend von einer Rohrverbindung der eingangs beschriebenen Art wird diese Aufgabe erfindungsgemäß dadurch gelöst, dass der Verschraubungskörper auf der dem Adapterring zugewandten Seite eine ausschließlich konische Anschlagfläche in Form eines 60°-Innenkonus aufweist und sich der Adapterring im Betriebszustand auf der dem Rohr zugewandten Seite mit einer radial verlaufenden Anlagefläche an der radial verlaufenden Stirnfläche des Rohrendes abstützt.

Der Adapterring bildet demnach den Übergang von dem Verschraubungskörper mit seinem Innenkonus zu dem Rohr mit seiner radial ausgebildeten Stirnfläche. Der Adapterring kann so ausgebildet sein, dass er ausschließlich an den zuvor genannten Kontaktflächen mit dem Verschraubungskörper und dem Rohr in Kontakt steht. Bei der Verschraubung der Überwurfmutter mit dem Verschraubungskörper wird das Rohr über den Haltewulst in Richtung des Verschraubungskörpers bewegt, bis der Widerstand durch den zwischengeschalteten Adapterring so groß ist, dass die Komponenten passgenau zusammengefügt sind und sich die Rohrverbindung im Betriebszustand befindet. Das Erreichen dieses Zustandes wird dem Monteur durch einen starken Drehmomentanstieg signalisiert. Durch die relativ großen Kontaktflächen des Adapterrings an dem Verschraubungskörper und an dem Rohr wird eine gute Kraftverteilung erreicht, wodurch eine äußerst stabile und haltbare Verbindung gewährleistet ist. Während des Verschraubungsvorgangs gewährleistet der Adapterring, dass sich der Verschraubungskörper relativ zu dem Rohr und der Überwurfmutter drehen kann.

Besonders vorteilhaft ist es, wenn der Adapterring einen größeren oder einen identischen Innendurchmesser als beziehungsweise wie der Verschraubungskörper und/oder das Rohr im Endbereich aufweist. Somit bleibt der Innendurchmesser der Rohrverbindung auf ihrer gesamten Länge erhalten beziehungsweise wird nicht reduziert, wodurch die oben aufgeführten Nachteile vermieden werden. Ein Auftreten von Verwirbelungen infolge eines Einschnürens des Innendurchmessers tritt demnach nicht auf.

Vorteilhafterweise weist der Adapterring mindestens eine umlaufende Nut zur Aufnahme jeweils eines Dichtrings, vorzugsweise jeweils einer Weichdichtung, auf. Die umlaufenden Nuten erlauben eine sehr sichere Unterbringung beziehungsweise Fixierung des Dichtrings bereits vor der Montage. Während der Montage der Rohrverbindung wird durch die sehr sichere Fixierung des Dichtrings die Gefahr reduziert, dass sich ein Dichtring unbeabsichtigt verlagert und womöglich seine Dichtfunktion nicht erfüllen kann.

Dabei ist es vorteilhaft, wenn sich eine Nut in der kegeligen Spannfläche des Adapterrings befindet und der Öffnungsquerschnitt dieser Nut im Betriebszustand der Rohrverbindung von dem innenkonus des Verschraubungskörpers verschlossen wird.

Ferner ist es vorteilhaft, wenn sich eine Nut zur Aufnahme eines Dichtrings in der Anlagefläche des Adapterrings befindet und der Öffnungsquerschnitt dieser Nut im Betriebszustand der Rohrverbindung von der Stirnseite des Rohres verschlossen wird.

Werden sowohl in der kegeligen Spannfläche als auch in der Anlagefläche des Adapterrings Nuten zur Aufnahme jeweils eines Dichtrings angeordnet, so wird im Bereich der Rohrverbindung eine optimale Abdichtung des im Innenquerschnitt befindlichen Mediums erreicht.

Eine besonders vorteilhafte Ausgestaltung der vorliegenden Erfindung sieht vor, dass der Adapterring auf der zum Rohrende zugewandten Seite einen axial über diese Seite vorstehenden, umlaufenden Führungskragen aufweist, dessen Innenseite eine Anlagefläche für die Mantelfläche des Rohres bildet. Mit Hilfe des an der Mantelfläche des Rohres angreifenden Führungskragens kann bei der Montage der Rohrverbindung eine besonders sichere und genaue Zentrierung des Adapterrings erfolgen. Fehlstellungen, beispielsweise der Art, dass der Adapterring in einem Bereich in den Innenbereich der Rohrverbindung ragt während er im gegenüberliegenden Bereich radial gesehen nach außen hin positioniert ist, können somit vermieden werden.

Eine Zentrierung des Adapterrings durch den Führungskragen ist insbesondere bei kleinen Rohrdurchmessern sehr vorteilhaft, da in diesem Fall bereits betragsmäßig vergleichsweise kleine Exzentrizitäten zu Problemen führen können. Insbesondere ist dies dann der Fall, wenn in der Stirnseite des Adapterrings ein Dichtring angeordnet ist, der mit der Stirnseite des Rohrendes zusammenwirkt. Bei derartigen Rohrverbindungen besteht im Übrigen die Gefahr, dass eine Fehlmontage mit exzentrischer Anordnung, bei der somit der Dichtring nicht vollflächig an der zugeordneten Stirnfläche des Rohrendes anliegt, vom Monteur überhaupt nicht bemerkt wird, da der Dichtring im gefügten Zustand sowie im Betriebszustand von außen nicht sichtbar ist.

Sollte aufgrund von zu großen Fertigungstoleranzen bei dem Verschraubungskörper bzw. der Überwurfmutter eine Exzentrizität von deren Längsachsen vorliegen, so würde bei einer Rohrverbindung ohne einen Führungskragen am Adapterring die Montage möglicherweise normal ausgeführt mit dem Ergebnis, dass im Betriebszustand ein entsprechender Versatz der Stirnflächen vorläge und die Dichtfunktion möglicherweise nicht gewährleistet wäre. Wenn ein Führungskragen am Adapterring vorhanden ist, ist eine Montage bei größerer Exzentrizität von Verschraubungskörper und Überwurfmutter gar nicht möglich, da ein Versatz im Bereich der Stirnflächen von Rohr und Adapterring unmöglich ist und daher für den Monteur das beim Anziehen der Verbindung erforderliche Drehmoment zu einem sehr frühen Zeitpunkt bereits drastisch ansteigt und ihm somit die Fehlerhaftigkeit der verwendeten Teile anzeigt. Ein fehlerhafter Betriebszustand mit eventueller Undichtigkeit der Verbindung kann also erst gar nicht erreicht werden.

Ferner sieht eine vorteilhafte Ausgestaltung der Erfindung vor, dass der Adapterring einen geringfügig kleineren Außendurchmesser als der Innendurchmesser der Überwurfmutter aufweist. Somit ist gewährleistet, dass der Adapterring ausschließlich mit dem Verschraubungskörper und dem Rohr in Kontakt ist, was besonders bei der Montage der Rohrverbindung vorteilhaft ist, da dann bei dem Verschrauben von Überwurfmutter und Verschraubungskörper keine Reibungskräfte von der Überwurfmutter auf den Adapterring übertragen werden.

Besonders vorteilhaft ist es, wenn der Führungskragen eine radial nach innen weisende Nase aufweist, da somit die Position des Adapterrings auf dem Rohr weiter optimiert werden kann.

Eine Klemmwirkung, die den zuvor auf das Rohr gesteckten Adapterring in seiner Position hält, wird erreicht, wenn der Innendurchmesser des Adapterrings im Bereich der Nase kleiner ist als der Außendurchmesser des Rohres im Endbereich. Dadurch wird die Montage der Rohrverschraubung erheblich vereinfacht, da das Rohr mit dem darauf gesteckten Adapterring als eine Einheit gehandhabt werden kann. Besonders bei einer Montage über Kopf wird die Montage erleichtert.

Schließlich ist es vorteilhaft, wenn der Adapterring im Bereich der Nase eine Gummierung aufweist, die eine gewisse Haftung des Adapterrings an dem Rohr erzeugt, wodurch ebenfalls eine Montagehilfe geschaffen wird.

### Ausführungsbeispiel

Die Erfindung wird nachfolgend anhand mehrerer Ausführungsbeispiele einer Rohrverbindung, die in den Zeichnungen dargestellt sind, näher erläutert.

Es zeigt:
- Figur 1: eine aufgereihte Darstellung eines Verschraubungskörpers, eines Adapterrings, eines umgeformten Rohrendes sowie einer Überwurfmutter, jeweils im Halbschnitt,
- Figur 2: eine Rohrverbindung aus den Komponenten gemäß Figur 1 im Betriebszustand im Halbschnitt,
- Figur 2a: eine Ausschnittsvergrößerung der Figur 2 im Bereich des Adapter-rings,
- Figur 3: wie Figur 2, jedoch mit teilweiser Darstellung des Verschraubungskörpers und mit einem alternativ geformten Adapterring, und
- Figur 3a: wie Figur 2a, jedoch mit einem alternativ geformten Adapterring.

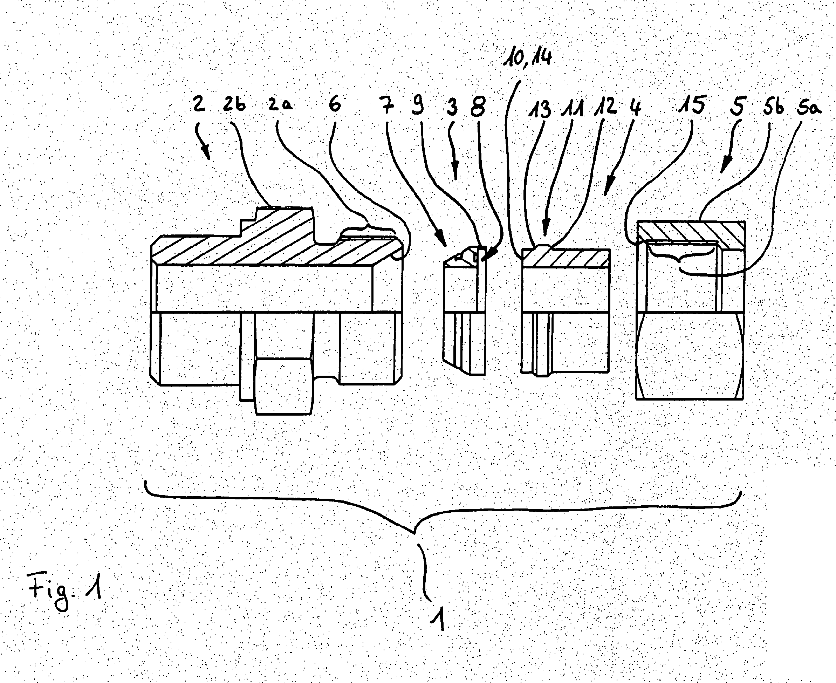

Figur 1 zeigt eine erfindungsgemäße Rohrverbindung 1, bei der der Anschaulichkeit halber die einzelnen Komponenten nebeneinander aufgereiht dargestellt sind. Ausgehend von der Mittelachse der Komponenten sind die oberen Hälften der Komponenten jeweils geschnitten dargestellt, während die untere Hälften jeweils als Ansicht der Komponenten abgebildet sind. Die Rohrverbindung 1 umfasst einen Verschraubungskörper 2 mit einem Außengewindeabschnitt 2a, einen Adapterring 3, ein Rohr 4, von dem lediglich ein kurzer Endabschnitt gezeigt ist, sowie eine Überwurfmutter 5 mit einem Innengewindeabschnitt 5a, das mit dem Außengewindeabschnitt 2a des Verschraubungskörpers 2 kompatibel ist. Auf der dem Adapterring 3 gewandten Seite weist der Verschraubungskörper 2 einen 60°-Innenkonus 6 auf. Ferner ist der Verschraubungskörper 2 mit einem Sechskant 2b und die Überwurfmutter 5 mit einem Sechskant 5b für den Ansatz eines Schlüssels ausgestattet.

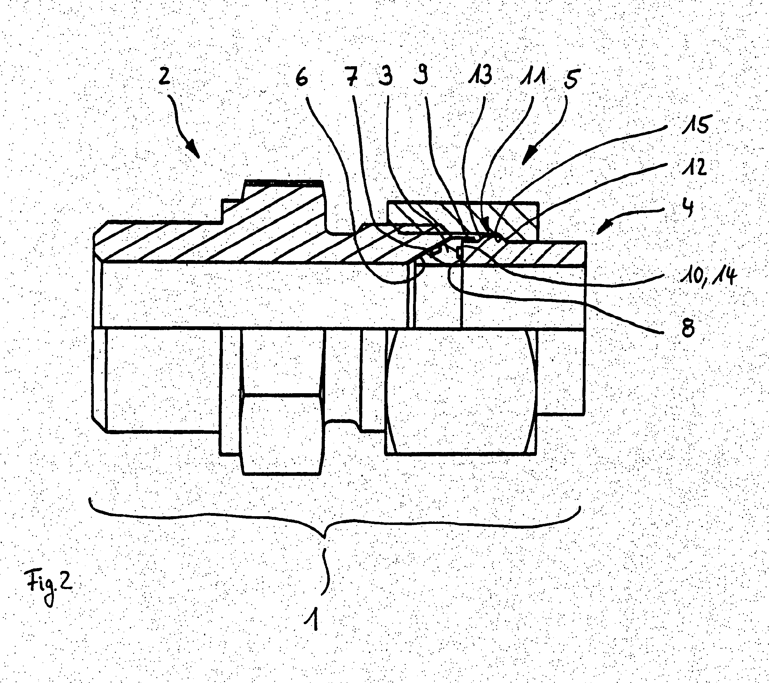

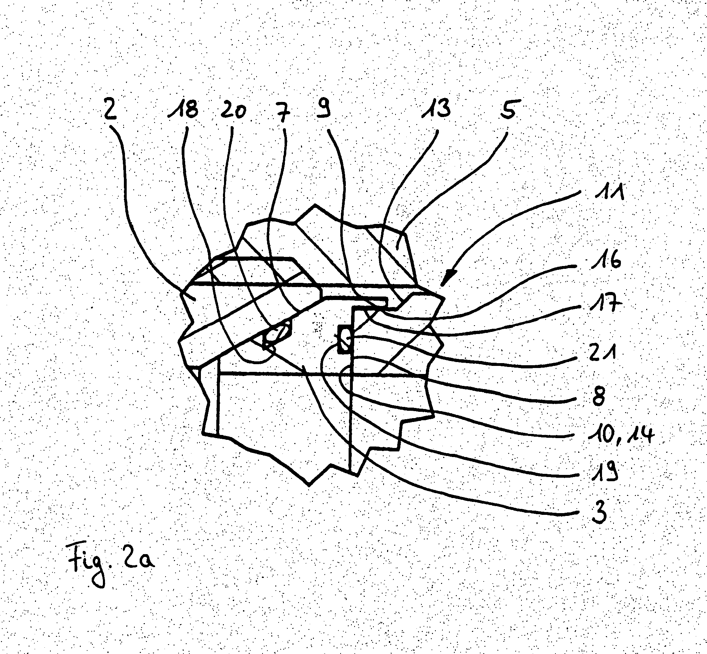

Der Adapterring 3 weist an der dem Verschraubungskörper 2 zugewandten Seite eine einen 60°-Kegel bildende kegelige Spannfläche 7 auf, die mit dem 60°-innenkonus 6 des Verschraubungskörpers 2 kompatibel ist. An der dem Rohr 4 zugewandten Seite weist der Adapterring 3 eine in radialer Richtung verlaufende ebene Anlagefläche 8 auf. Weiterhin ist der Adapterring 3 entlang seines Umfangs mit einem in axialer Richtung des Adapterrings 3 einen Versprung bildenden Führungskragen 9 ausgestattet. Eine ausführliche Beschreibung des Adapterrings 3 erfolgt anhand der Figuren 2 bis 3a.

Das Rohr 4 weist in gewissem Abstand von seiner Stirnseite 10 einen mittels eines Stauchvorgangs in einem speziellen Werkzeug ausgeformten Haltewulst 11 auf, der eine der Stirnseite 10 des Rohres 4 abgewandte hintere Haltefläche 12 in Form eines 90°-Kegels und eine gegenüberliegende vordere Haltefläche 13 besitzt, die ebenfalls kegelförmig gestaltet ist. Das Rohrende weist einen zylindrischen Endabschnitt mit einer ebenen Stirnfläche 14 auf, wobei sein Innendurchmesser dem Innendurchmesser des Rohres 4 im unverformten Bereicht entspricht. Die Querschnittsfläche des Rohres im nicht umgeformten Bereich entspricht dem Querschnitt der Stirnfläche 14.

Die Überwurfmutter 5 besitzt an ihrer zu dem Rohr 4 hin weisenden Seite eine innere Spannfläche 15, die einen 90°-Konus bildet.

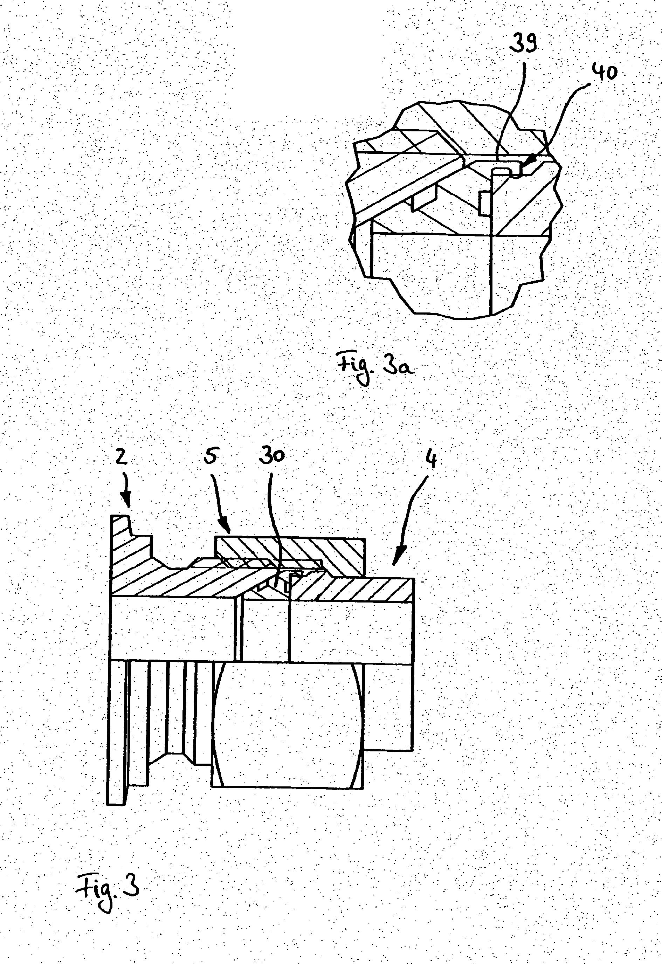

In Figur 2 ist die Rohrverbindung 1 in ihrem Betriebszustand dargestellt. Durch die Verschraubung der Überwurfmutter 5 mit dem Verschraubungskörper 2 sind die Komponenten der Rohrverbindung 1 derart zusammengefügt, dass der 60°-Innenkonus 6 des Verschraubungskörpers 2 mit der kegeligen Spannfläche 7 des Adapterrings 3, die in radialer Richtung verlaufende ebene Anlagefläche 8 mit der Stirnfläche 14 des Rohres 4 und die der Stirnseite 10 des Rohres 4 abgewandte hintere Haltefläche 12 des Haltewulstes 11 mit der inneren Spannfläche 15 der Überwurfmutter 5 zusammenwirkt. Der Adapterring 3 kommt demnach lediglich an dem Verschraubungskörper 2 und dem Rohr 4 zur Anlage, wobei zum Einen die kegelige Spannfläche 7 des Adapterrings 3 über ihre gesamte Länge an dem Innenkonus 6 des Verschraubungskörpers 2 anliegt und zum Anderen die gesamte Stirnfläche 14 des Rohres 4 an der Anlagefläche 8 des Adapterrings 3 anliegt. Der umlaufende Führungskragen 9 des Adapterrings 3 weist einen Innendurchmesser auf, der in etwa dem Außendurchmesser des zylindrischen Rohrendes entspricht, so dass die Mantelfläche 16 des Rohres 4 an der Innenseite 17 des Führungskragens 9 anliegt, was in Figur 3 gut zu erkennen ist. Das Rohrende ist formschlüssig in den Winkelbereich des Adapterrings 3, gebildet durch die Anlagefläche 8 und den Führungskragen 9 des Adapterrings 3, eingebettet. Dadurch wird bei der Montage der Rohrverbindung 1 gewährleistet, dass die Komponenten ordnungsgemäß zusammengefügt werden. Ferner gewährleistet die Geometrie des Adapterrings 3, dass in diesen bei der Montage der Rohrverbindung 1 kein Drehmoment eingeleitet wird, so dass der Adapterring 3 während der Montage still steht, wodurch der Schraubvorgang nicht beeinträchtigt wird. Der Innendurchmesser des Adapterrings 3 entspricht dem Innendurchmesser des Verschraubungskörpers 2 und des Rohres 4, wodurch gewährleistet wird, dass der Innendurchmesser innerhalb der Rohrverbindung 1 auf der gesamten Länge erhalten bleibt, wodurch Verwirbelungen eines durchströmenden Mediums vermieden werden.

Die in Figur 2a dargestellte Ausschnittsvergrößerung der Figur 2 im Bereich des Adapterrings 3 verdeutlicht noch einmal die Position des Adapterrings 3 zwischen dem Verschraubungskörper 2 und dem Rohr 4. Der Haltewulst 11 des Rohres 4 weist eine größere Dicke auf als die Wandstärke des Führungskragens 9 des Adapterrings 3, wodurch zwischen dem Adapterring 3 und der Überwurfmutter 5 ein Freiraum verbleibt. D.h. der Führungskragen 9 besitzt einen kleineren Außendurchmesser als der Haltewulst 11 des Rohres 4. Die vordere Haltefläche 13 des Haltewulstes 11 liegt frei und ist mit keiner der anderen Komponenten in Kontakt. Die kegelige Spannfläche 7 sowie die ebene Anlagefläche 8 des Adapterrings 3 sind jeweils in ihrem mittleren Bereich mit einer umlaufenden Nut 18,19 zur Aufnahme eines als Weichdichtung ausgebildeten Dichtrings 20, 21 ausgestattet. Der Öffnungsquerschnitt dieser Nuten 18, 19 wird im Betriebszustand von dem Innenkonus 6 des Verschraubungskörpers 2 beziehungsweise von der Stirnfläche 14 des Rohres 4 verschlossen.

Die Figuren 3 und 3a zeigen eine Rohrverschraubung 1 analog zu den Figuren 2 und 2a, jedoch ist der Adapterring 30 alternativ geformt und in Figur 3 ist lediglich der Endbereich des Verschraubungskörpers 2 dargestellt. Der Unterschied des Adapterrings 30 zu der Ausführungsform nach Figuren 2 und 2a besteht in der Ausbildung des Führungskragens 39, der zusätzlich mit einer radial nach innen weisenden Nase 40 ausgestattet ist. Der Innendurchmesser des Adapterrings 30 im Bereich der Nase 40 ist kleiner als der Außendurchmesser des Rohres 4 im Endbereich. Wird der Adapterring 30 auf das Rohr 4 gesteckt, entstehen Klemmkräfte, die den Adapterring 30 auf dem Rohr 4 in Position halten, so dass die Montage der Rohrverschraubung 1 wesentlich vereinfacht wird. Das Rohr 4 mit dem daran angebrachten Adapterring 30 kann als eine Einheit gehandhabt werden, wodurch beispielsweise das Montieren über Kopf erleichtert wird. Die Haftung des Adapterrings 30 an dem Rohrende kann weiterhin durch das Aufbringen einer Gummierung an der Nase 40 verbessert werden.

Der besseren Übersicht halber ist in den Figuren 3 und 3a darauf verzichtet worden die Dichtungsringe in den Nuten darzustellen.

### Bezugszeichenliste

- 1: Rohrverbindung
- 2: Verschraubungskörper
- 2a: Außengewindeabschnitt
- 2b: Sechskant
- 3: Adapterring
- 4: Rohr
- 5: Überwurfmutter
- 5a: Innengewindeabschnitt
- 5b: Sechskant
- 6: Innenkonus
- 7: Kegelige Spannfläche
- 8: Anlagefläche
- 9: Führungskragen
- 10: Stirnseite
- 11: Haltewulst
- 12: Hintere Haltefläche
- 13: Vordere Haltefläche
- 14: Stirnfläche
- 15: Innere Spannfläche
- 16: Mantelfläche
- 17: Innenseite
- 18: umlaufenden Nut
- 19: umlaufende Nut
- 20: Dichtring
- 21: Dichtring
- 30: Adapterring
- 39: Führungskragen
- 40: Nase

## Patentansprüche

1. Rohrverbindung (1) mit einem umgeformten Rohr (4), einem Verschraubungskörper (2) mit einem Innenkonus (6), einer auf den Verschraubungskörper (2) aufschraubbaren Überwurfmutter (5) mit einer inneren Spannfläche (15), die im Betriebszustand der Rohrverbindung (1) mit einer dem Rohrende abgewandten umformtechnisch hergestellten, radial über die äußere Mantelfläche des Rohres nach außen vorstehenden Haltefläche (12) eines Haltewulstes (11) des Rohres (4) zusammenwirkt, sowie mit einem Adapterring (3, 30), der sich im Betriebszustand an der dem Verschraubungskörper (2) zugewandten Seite mit einer kegeligen Spannfläche (7) in dem Innenkonus (6) des Verschraubungskörpers (2) abstützt, wobei eine radial verlaufende Stirnfläche (14) des Rohrendes denselben Querschnitt aufweist wie das übrige Rohr (4) außerhalb des Haltewulstes (11), **dadurch gekennzeichnet, dass** der Verschraubungskörper (2) auf der dem Adapterring (3, 30) zugewandten Seite eine ausschließlich konische Anschlagfläche in Form eines 60°-Innenkonus (6) aufweist und sich der Adapterring (3, 30) im Betriebszustand auf der dem Rohr (4) zugewandten Seite mit einer radial verlaufenden Anlagefläche (8) an der radial verlaufenden Stirnfläche (14) des Rohrendes abstützt.

2. Rohrverbindung (1) nach Anspruch 1, **dadurch gekennzeichnet, dass** der Adapterring (3, 30) einen größeren oder einen identischen Innendurchmesser als beziehungsweise wie der Verschraubungskörper (2) und oder das Rohr (4) im Endbereich aufweist.

3. Rohrverbindung (1) nach Anspruch 1 oder 2, **dadurch gekennzeichnet, dass** der Adapterring (3, 30) mindestens eine umlaufende Nut (18, 19) zur Aufnahme jeweils eines Dichtrings (20, 21), vorzugsweise jeweils einer WeichdiChtung, aufweist.

4. Rohrverbindung (1) nach Anspruch 3, **dadurch gekennzeichnet, dass** sich eine Nut (18) in der kegeligen Spannfläche (7) des Adapterrings (3, 30) befindet und der Öffnungsquerschnitt dieser Nut (18) im Betriebszustand der Rohrverbindung (1) von dem Innenkonus (6) des Verschraubungskörpers (2) verschlossen wird.

5. Rohrverbindung (1) nach Anspruch 3, **dadurch gekennzeichnet, dass** sich eine Nut (19) in der Anlagefläche (8) des Adapterrings (3, 30) befindet und der Öffnungsquerschnitt dieser Nut (19) im Betriebszustand der Rohrverbindung (1) von der Stirnseite (10) des Rohres (4) verschlossen wird.

6. Rohrverbindung (1) nach einem der vorangegangenen Ansprüche, **dadurch gekennzeichnet, dass** der Adapterring (3, 30) auf der zum Rohrende zugewandten Seite einen axial über diese Seite vorstehenden, umlaufenden Führungskragen (9, 39) aufweist, dessen Innenseite (17) eine Anlagefläche für die Mantelfläche (16) des Rohres bildet.

7. Rohrverbindung (1) nach einem der vorangegangenen Ansprüche, **dadurch gekennzeichnet, dass** der Adapterring (3, 30) einen geringfügig kleineren Au-Bendurchmesser als der Innendurchmesser der Überwurfmutter (5) aufweist.

8. Rohrverbindung (1) nach Anspruch 6 oder 7, **dadurch gekennzeichnet, dass** der Führungskragen (39) eine radial nach innen weisende Nase (40) aufweist.

9. Rohrverbindung (1) nach Anspruch 8, **dadurch gekennzeichnet, dass** der Innendurchmesser des Adapterrings (30) im Bereich der Nase (40) kleiner ist als der Außendurchmesser des Rohres (4) im Endbereich.

10. Rohrverbindung (1) nach Anspruch 8 oder 9, **dadurch gekennzeichnet, dass** der Adapterring (30) im Bereich der Nase (40) eine Gummierung aufweist.

## Claims

1. A pipe joint (1) with a formed pipe (4), a screw coupling body (2) with an inner cone (6), a cap nut (5) that can be screwed onto the screw coupling body (2) and has an inner clamping surface (15) that interacts with a retaining surface (12) of a retaining bead (11) of the pipe (4) manufactured via forming and facing away from the pipe end with the pipe joint (1) in operation, as well as an adapter ring (3, 30) supported in operation on the side facing the screw coupling body (2) with a conical clamping surface (7) in the inner cone (6) of the screw coupling body (2), wherein a radially running face (14) of the pipe end exhibits the same cross section as the remaining pipe (4) outside the retaining bead (11), **characterized in that** the screw coupling body (2) exhibits an exclusively conical stop surface in the form of a 60° inner cone (6) on the side facing the adapter ring (3, 30), and the adapter ring (3, 30) is supported against a radially running abutting surface (8) on the radially running faces (14) of the pipe end during operation on the side facing the pipe (4).

2. The pipe joint (1) according to claim 1, **characterized in that** the adapter ring (3, 30) exhibits a larger or identical inner diameter than the screw coupling body (2) and/or the pipe (4) in the end region.

3. The pipe joint (1) according to claim 1 or 2, **characterized in that** the adapter ring (3, 30) exhibits at least one continuous groove (18, 19) for holding a respective packing ring (20, 21), preferably a respective soft packing.

4. The pipe joint (1) according to claim 3, **characterized in that** a groove (18) is located in the conical clamping surface (7) of the adapter ring (3, 30) and the opening cross section of this groove is sealed during operation of the pipe joint (1) by the inner cone (6) of the screw coupling body (2).

5. The pipe joint (1) according to claim 3, **characterized in that** a groove (19) is located in the abutting surface (8) of the adapter ring (3, 30), and the opening cross section of this groove (19) is sealed in during operation of the pipe joint (1) by the face (10) of the pipe (4).

6. The pipe joint (1) according to one of the preceding claims, **characterized in that** the adapter ring (3, 30) forms a continuous guiding collar (9, 39) on the side facing the pipe end, which projects axially over this side and whose interior side (17) forms an abutting surface for the jacket surface (16) of the pipe.

7. The pipe joint (1) according to one of the preceding claims, **characterized in that** the adapter ring (3, 30) exhibits a slightly smaller outer diameter than the inner diameter of the cap nut (5).

8. The pipe joint (1) according to claim 6 or 7, **characterized in that** the guiding collar (39) exhibits a radially inwardly facing nose (40).

9. The pipe joint (1) according to claim 8, **characterized in that** the inner diameter of the adapter ring (30) in the area of the nose (40) is smaller than the outer diameter of the pipe (4) in the end region.

10. The pipe joint (1) according to claim 8 or 9, **characterized in that** the adapter ring (30) exhibits a rubber covering in the area of the nose (40).

## Revendications

1. Raccord de tuyau (1) comprenant un tuyau (4) formé, un corps d'assemblage vissé (2) avec un cône intérieur (6), un écrou raccord (5) pouvant être vissé sur le corps d'assemblage vissé (2) avec une surface de serrage (15) intérieure, qui coopère, lorsque le raccord de tuyau (1) est dans l'état de service, avec une surface de retenue (12) opposée à l'extrémité de tuyau, fabriquée par la technique de formage, dépassant radialement de la surface d'enveloppe extérieure du tuyau vers l'extérieur, d'un renflement de retenue (11) du tuyau (4), ainsi qu'une bague d'adaptation (3, 30), qui, dans l'état de service, s'appuie sur le côté tourné vers le corps d'assemblage vissé (2) avec une surface de serrage (7) conique dans le cône intérieur (6) du corps d'assemblage vissé (2), une surface frontale (14) agencée radialement de l'extrémité de tuyau présentant la même section que le tuyau (4) restant à l'extérieur du renflement de retenue (11), **caractérisé en ce que** le corps d'assemblage vissé (2) présente sur le côté tourné vers la bague d'adaptation (3, 30) une surface d'appui exclusivement conique sous la forme d'un cône intérieur de 60° (6) et la bague d'adaptation (3, 30) s'appuie, dans l'état de service, sur le côté tourné vers le tuyau (4) avec une surface d'appui (8) agencée radialement sur la surface frontale (14) agencée radialement de l'extrémité de tuyau.

2. Raccord de tuyau (1) selon la revendication 1, **caractérisé en ce que** la bague d'adaptation (3, 30) présente un diamètre intérieur plus grand ou identique par rapport au corps d'assemblage vissé (2) et/ou au tuyau (4) dans la zone d'extrémité.

3. Raccord de tuyau (1) selon la revendication 1 ou 2, **caractérisé en ce que** la bague d'adaptation (3, 30) présente au moins une rainure (18, 19) périphérique pour le logement respectivement d'une bague d'étanchéité (20, 21), de préférence respectivement d'un joint souple.

4. Raccord de tuyau (1) selon la revendication 3, **caractérisé en ce qu'**une rainure (18) se trouve dans la surface de serrage (7) conique de la bague d'adaptation (3, 30) et la section d'ouverture de cette rainure (18) est fermée par le cône intérieur (6) du corps d'assemblage vissé (2) lorsque le raccord de tuyau (1) est dans l'état de service.

5. Raccord de tuyau (1) selon la revendication 3, **caractérisé en ce qu'**une rainure (19) se trouve dans la surface d'appui (8) de la bague d'adaptation (3, 30) et la section d'ouverture de cette rainure (19) est fermée par le côté avant (10) du tuyau (4) lorsque le raccord de tuyau (1) est dans l'état de service.

6. Raccord de tuyau (1) selon l'une quelconque des revendications précédentes, **caractérisé en ce que** la bague d'adaptation (3, 30) présente sur le côté tourné vers l'extrémité de tuyau une collerette de guidage (9, 39) périphérique, dépassant axialement par ce côté, dont le côté intérieur (17) forme une surface d'appui pour la surface d'enveloppe (16) du tuyau.

7. Raccord de tuyau (1) selon l'une quelconque des revendications précédentes, **caractérisé en ce que** la bague d'adaptation (3, 30) présente un diamètre extérieur légèrement plus petit que le diamètre intérieur de l'écrou raccord (5).

8. Raccord de tuyau (1) selon la revendication 6 ou 7, **caractérisé en ce que** la collerette de guidage (39) présente un ergot (40) dirigé radialement vers l'intérieur.

9. Raccord de tuyau (1) selon la revendication 8, **caractérisé en ce que** le diamètre intérieur de la bague d'adaptation (30) dans la zone de l'ergot (40) est inférieur au diamètre extérieur du tuyau (4) dans la zone d'extrémité.

10. Raccord de tuyau (1) selon la revendication 8 ou 9, **caractérisé en ce que** la bague d'adaptation (30) présente un caoutchoutage dans la zone de l'ergot (40).
